# EUROPEAN PATENT SPECIFICATION

(11) **EP 1 907 478 B1**
(45) Date of publication and mention of the grant of the patent: **08.02.2012**
(21) Application number: 06768944.8
(22) Date of filing: 20.06.2006
(51) Int. Cl.: C08L 69/00, C08K 5/523, C08L 25/04, C08L 51/04

(54) **POLYCARBONATE RESIN COMPOSITION HAVING GOOD CHEMICAL RESISTANCE AND FLOWABILITY**
POLYCARBONATHARZZUSAMMENSETZUNG MIT GUTER CHEMIKALIENBESTÄNDIGKEIT UND FLIESSFÄHIGKEIT
COMPOSITION DE RÉSINE DE POLYCARBONATE AYANT UNE BONNE RÉSISTANCE AUX PRODUITS CHIMIQUES ET UNE BONNE FLUIDITÉ

(30) Priority: 19.06.2006 KR 20060054981; 29.06.2005 KR 20050057022
(43) Date of publication of application: 09.04.2008
(73) Proprietor: CHEIL INDUSTRIES INC., Gumi-si, Gyeongsangbuk-do 730-710 (KR)
(72) Inventor: MIN, Sung Sig, Gangseo-gu, Seoul 157-040 (KR); LEE, Byung Choon, Seodaemun-gu, Seoul 120-846 (KR); LEE, Han Su, Songpa-gu, Seoul 138-776 (KR)
(74) Representative: Bublak, Wolfgang
(86) International application number: PCT/KR2006/002355
(87) International publication number: WO 2007/001130

(56) References cited:
- JP-A- 2000 086 844
- JP-A- 2000 086 844
- JP-A- 2000 086 845
- JP-A- 2000 086 847
- JP-A- 2004 210 916
- KR-A- 20010 076 179
- KR-A- 20060 037 581
- DATABASE WPI Week 200714, Derwent Publications Ltd., London, GB; AN 2007-135726, XP002538602 & KR 2006 0 037 581 A (CHEIL IND INC) 03 May 2006

## Description

### Technical Field

The present invention relates to a polycarbonate resin composition. More particularly, the present invention relates to a polycarbonate resin composition having good chemical resistance and flowability as well as good impact resistance by introducing a syndiotactic polystyrene, a core-shell graft copolymer, and a phosphoric acid ester compound to a polycarbonate resin.

### Background Art

A polycarbonate resin is widely used as an engineering plastic due to its excellent impact resistance, flame retardant property, dimensional stability, and high thermal resistance, in comparison with other comparable resins. In particular, the use of the polycarbonate resin rapidly increases in application to handheld electronic devices such as mobile phones demanding high impact resistance in various situations. In regard to the exterior design of a mobile phone, the trend in industry is that more attention is paid to the process of coating a paint.

This emphasis on the process of coating is reflected-either in an additional process of coating on the existing facing material which was not painted in the past, or in increasing the thickness of a coating layer for increasing the effect of coating with paint. In either case when the process of coating with paint is added, or the thickness of the painted layer increases, the resin is to be exposed to a paint diluting solution or paint thinner, which might causes the paint diluting solution to penetrate into the resin so as that the property of matter of the resin as the facing material may be deteriorated. Typically polycarbonate resins as amorphous polymer are not as good as crystalline polymer in resisting to a solvent for diluting paints. Because of this reason, the polycarbonate resin is disadvantageous to be used as a facing material of various products including handheld electronic devices.

A lot of studies have been underway for the improvement of the chemical resistance of polycarbonate. The studies for the improvement of chemical resistance have been focused on the method of how to blend polycarbonate resins with polymers into which chemical permeation is relatively slow. While this approach can improve the chemical resistance of polycarbonate resins, the addition of other polymers may weaken the impact resistance and fatigue resistance of polycarbonate resins. As a result, there are a lot of needs to improve polycarbonate resins to be used for the handheld electronic devices.

Accordingly, the present inventors in their studies found out the fact the chemical resistance and flowability of the polycarbonate resins can improve as the impact resistance and fatigue resistance remain the same if a syndiotactic polystyrene polymer resin, a core-shell graft copolymer, and a phosphoric acid ester compound are introduced to the polycarbonate resin. Thus, the inventors present polycarbonate resin compositions having not only good impact resistance but also good chemical resistance and flowability, based on their findings.

### Disclosure of Invention

### Technical Problem

An object of the present invention is to provide polycarbonate resin compositions having a good chemical resistant property.

Another object of the present invention is to provide polycarbonate resin compositi ons having good chemical and impact resistance.

A further object of the present invention is to provide polycarbonate resin compositions having good flowability and impact resistance.

A still further object of the present invention is to provide polycarbonate resin compositions having good fatigue resistance.

The objects and the others shall be met by the present invention which shall be discussed in detail in the following.

### Technical Solution

The polycarbonate resin composition, according to the present invention, comprises (A) 80 to 98.5 parts by weight of a polycarbonate resin, (B) 0.5 to 10 parts by weight of a syndiotactic polystyrene resin, (C) 1 to 30 parts by weight of a core-shell graft copolymer, and (D) 0.1 to 10 parts by weight of a phosphoric acid ester compound.

### Best Mode for Carrying Out the Invention

A polycarbonate resin, a syndiotactic polystyrene resin, a core-shell graft copolymer, and a phosphoric acid ester compound used in polycarbonate resin compositions of the present invention shall be discussed in the following.

### (A) Polycarbonate Resin

The polycarbonate resin to be used in the resin compositions of the present invention may be produced by reacting dehydric phenol with phosgene in the presence of a molecular weight controller and a catalyst, or by using an ester mutual exchange reaction of carbonate precursor such as dehydric phenol and dephenyl carbonate. The examples of the polycarbonate resin may include linear polycarbonates, branched polycarbonates, and polyester carbonate copolymers and the like.

The dehydric phenol can be one of bisphenols, and the preferable bisphenol may be 2,2-bis(4-hydroxyphenyl)propane (bisphenol A). The bisphenol A may be replaced partly or entirely with other dehydric phenols. Dehydric phenols other than bisphenol A include hydroquinone, 4,4'-dehydroxyphenyl, bis (4-hydroxyphenyl) methane, 1,1-bis (4-hydroxyphenyl) cyclohexane, 2,2-bis (3,5-dimethyl-4-hydroxyphenyl) propane, bis (4-hydroxyphenyl) sulfide, bis (4-hydroxyphenyl) sulfone, bis (4-hydroxyphenyl) sulfoxide, bis (4-hydroxyphenyl) ketone, bis (4-hydroxyphenyl) ether and halogenated bisphenol including 2,2-bis (3,5-dibromo-4-hydroxyphenyl) propane.

The polycarbonate resin (A) may be a homopolymer, a copolymer using two or more different dehydricphenols, or a mixture of the foregoing.

The linear polycarbonate resins include, for example, a bisphenol A polycarbonate resin. The branched polycarbonates may be produced by reacting a multi-functional aromatic compound such as trimellitic anhydride and trimellitic acid with a dehyroxyphenol and a carbonate precursor. The polyestercarbonate may be produced by reacting a bi-functional carboxylic acid with a dehydric phenol and a carbonate precursor.

In accordance with the present invention, the polycarbonate resin (A) is employed in the range of 80 to 98.5 parts by weight. Impact resistance might be deteriorated if less than 80 parts by weight of a polycarbonate resin (A) is used.

### (B) Syndiotactic Polystyrene Resin

Polystyrene resins generally three different structures: atactic, isotactic and syndiotactic, depending on the location of benzene ring as a side chain. Benzene rings are irregularly arranged in the atactic polystyrene, and benzene rings are regularly arranged at one side of main chain in the isotactic polystyrene. On the other hand, benzene rings are regularly arranged by turns in the syndiotatic polystyrene.

The syndiotatic polystyrene may be prepared by polymerizing one or more styrene monomers in the presence of a catalyst system comprising a metallocene catalyst and a cocatalyst. In the metallocene catalyst, one or two cycloalkanedienyl (cyclopentadienyl, indenyl, fluorenyl and derivatives thereof) is connected to a periodic table group IV transition metal such as Ti, Zr, and Hf.

A method for polymerizing a styrene monomer is disclosed in U.S. Patent No. 6,010,974. This patent uses metallocene catalysts including alkyl-bridge binuclear metallocene catalyst, silyl-bridge binulcear metallocene catalyst and alkyl-silyl bridge binulcear metallocene catalyst, and lead to production of polystyrene resins having a high stereoregularity, a high melting point and a good molecular weight distribution.

On the other hand, syndiotactic polystyrene using a catalyst system comprising a metallocene catalyst and a co-catalyst is disclosed in U.S. Patent No. 6,284,700.

It is preferable in the present invention to use a syndiotatic polystyrene resin having the degree of syndiotactic tacticity greater than 97 %, among syndiotatic polystyrene resins. Chemical resistance might not be as good as expected if syndiotactic tacticity is less than 97 %.

In polycarbonate resin compositions according to the invention, the content of the syndiotactic polystyrene resin (B) is 0.5 to 10 parts by weight. Chemical resistance of the resin might not be sufficient if less than 0.5 parts by weight is used, and impact resistance of the resin might not be sufficient if more than 10 parts by weight is used.

### (C) Core-shell Graft Copolymer

The core-shell graft copolymer (C) to use with the present invention may have a hard shell with grafting of vinyl monomers to the core structure of the resin.

The core-shell structure of the core-shell graft copolymer (C) is formed by grafting to a rubber core one or more unsaturated compounds such as graftable C₁-C₈ methacryl acid alkyl ester, C₁-C₈ acrylic acid alkyl ester, maleic anhydride, and C₁-C₄ alkyl or phenyl nucleus-substituted maleimide after preparing the rubber coreby polymerizing one or more rubbers selected from the group consisting of diene rubbers having 4 to 6 of carbons,acrylate rubbers, and silicone rubbers. The content of the rubber is preferably 50 to 90 parts by weight on the basis of 100 parts by weight of the core-shell graft copolymer (C).

The acrylate rubber may be formed using acrylate monomers such as methylacrylate, ethylacrylate, n-propylacrylate, n-butylacrylate, 2-ethylhexylacrylate, hexylmethacrylate, 2-ethylhexylmethacrylate. Ethyleneglycoldimethacrylate, propyleneglycoldimethacrylate, 1,3-butyleneglycoldimethacrylate, 1,4-butyleneglycoldimethacrylate, allylmethacrylate, triallylcyanurate or the like may be added as a hardner at this time.

The silicone rubber may be produced from cyclosiloxane, and examples of the cyclosiloxane include hexamethylcyclotrisiloxane, octamethylcyclotetrasiloxane, decamethylcyclopentasiloxane, dodecamethylcyclohexasiloxane, trimethyltriphenylcyclotrisiloxane, tetramethyltetraphenylcyclotetrosiloxane, octaphenylcylotetrasiloxane, and the like. The silicone rubber may be produced out of one or more among these siloxanes. A hardner like trimethoxymethylsilane, triethoxyphenylsilane, tetramethoxysilane, tetraethoxysilane, or the like may be used.

It may be much better to use a silicone rubber, or the mixture of a silicone rubber with an acrylate rubber among the rubbersin terms of chemical resistance and heat stability based on the structural stability. Further, rubbers having particles with an average diameter from 0.4 to 1 □ is preferable as they generally have good impact resistance and coloring property.

The C₁-C₈ methacryl acid alkyl ester or the C₁-C₈ acrylic acid alkyl ester as a methacrylic acid ester is a monohydric alcohol having 1 to 8 carbon atom. Examples of these include methacryl acid methyl ester, methacryl acid ethyl ester, or methacryl acid propyl ester. Methacryl acid methyl ester is most preferably used.

Polycarbonate resin compositions according to the invention contains the core-shell graft copolymer from 1 to 30 parts by weight, preferably 1 to 10 parts by weight with reference to 100 parts of the composition including (A) polycarbonate resin, (B) syndiotactic polystyrene resin, (C) core-shell graft copolymer and (D) phosphoric acid ester compound. The effect of impact strength might not be sufficient if less than 1 part is used, and there might be a decrease in tensile strength, flexural strength, and flexural modulus if more than 30 parts by weight is used.

### (D) Phosphoric Acid Ester Compound

The phosphoric acid ester compounds (D) or mixtures thereof that can be used in the polycarbonate resin compositions of the present invention may be represented by the following structural formula (I):

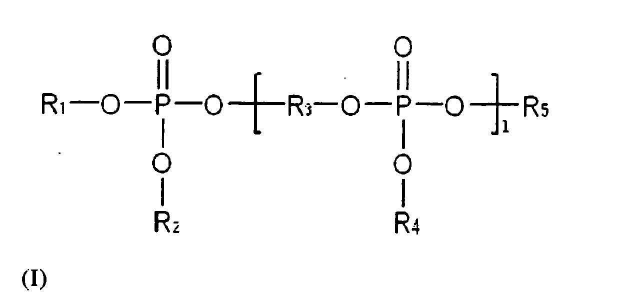

In the formula (I), R₁, R₂, R₄ and R₅ re independently C₆₋₂₀ aryl or alkyl-substituted C₆₋₂₀ aryl; R₃ is C₆₋₃₀ aryl or alkyl-substituted C₆₋₃₀ aryl derivative; and the mean value of "1" as the number average of the degree of polymerization is 0 to 3.

R₁, R₂, R₄ and R₅ are preferably phenyl, or substituted phenyl substituted with alkyl such as methyl, ethyl, isopropyl, t-butyl, isobutyl, isoamyl, t-amyl or the like. Among these, phenyl substituted with methyl, ethyl, isopropyl, or t-butyl is most preferable.

The compound of the chemical formula I in the production of the resin composition of the present invention is oligomeric phosphoric acid ester compounds derived from either C₆₋₃₀ aryl- or alkyl-substituted C₆₋₃₀ aryl. Preferred C₆₋₃₀ aryl- or alkyl-substituted C₆₋₃₀ aryl is derived from resorcinol, hydroquinone, or bisphenol-A.

The phosphoric acid ester compounds are aryl-substituted phosphoric acid ester, which has the mean value 1 for the bracketed moiety from 0 to 3. A single phosphoric acid ester compound having 0, 1, 2, and 3 as the value of 1 can be employed alone. A mixture of two or more such phosphoric acid esters can also be employed, and is prepared in the course of polymerization, or is formulated with phosphoric ester compounds having different 1 values.

In the polycarbonate resin composition according to the present invention, 0.01 to 10, preferably 0.1 to 7 parts by weight of the phosphorus acid ester compound (D) may be used with reference to 100 parts of the composition including (A) polycarbonate resin, (B) syndiotactic polystyrene resin, (C) cone-shell graft copolymer and (D) phosphoric acid ester compound. Chemical resistance and flowability may not be significantly improved if less than 0.01 parts by weight is used, and there may be a decrease in mechanical strength, such as impact strength, tensile strength, flexural strength, and flexural modulus if more than 10 parts by weight is used.

Other additives may be added to the resin compositions according to embodiments of the present invention.Particularly, mechanical strength, heat deflection temperature, and the like may be improved if certain inorganic filling materials are added, and such materials include glass fiber, carbon fiber, talc, silica, mica, alumina, and the like. Further, other materials such as an ultraviolet absorber, a heat stabilizer, an antioxidant, a flame retardant, a lubricant, a dye or pigment, or the like may be added in producing the resin compositions of the present invention.

In regard to the properties of the resin composition of the present invention, it is preferred that 1/8" izod impact strength and 1/4" izod impact strength measured by ASTM D256 are more than 70 and 50 kg·□/□ respectively.

Further, chemical resistance may be measured by falling ball impact tests prior to and after submerging the material into an organic solvent. As a test specimen, 3 mm x 100 mm x 100 mm of a panel block made of a polycarbonate resin composition is to be submerged into a paint thinner for one minute and is dried at 80 °C for 30 minutes. Then, in conducting the falling ball impact test on the specimen, the load of the falling ball at a fixed position is measured, and is to be compared with the load of the test specimen prior to the submergence. The preferred falling ball impact strength prior to the submergence into the solvent is more than 1,000 N, and after the submergence is more than 800 N, and less than 25 % of the brittle fracture rate after the submergence is preferable. Various paint thinners may be used independently or as mixtures with other solvents. Examples of the paint thinners include alcohols and ketones.

Further, flowablility may be measured by the length of a resin pellet after the pellet having 1 mm thickness is injected through an injection machine at the resin temperature from 260 to 330 °C and into a mold at its temperature from 60 to 100 °C. The length of a resin pellet is also called 'injection flow length' and the value of the injection flow length is preferably greater than 90 mm.

The resin composition of the present invention may be produced using well known processes. For example, pellet may be produced by extruding through an extruder after melting a resin composition as discussed above with additives.

The composition of the present invention may be used for molding an article of a product, and is particularly fit for producing electrical or electronic products such as the housing of TVs, computers, mobile phones, and office supplies.

The present invention will be further discussed in the following examples, and the following examples are presented to illustrate but not to limit this invention.

### Mode for the Invention

### Examples

The details of (A) a polycarbonate resin, (B) a syndiotactic polystyrene resin, (C) a core-shell graft copolymer, (D) a phosphoric acid ester compound in Examples and Comparative Examples of the present invention were as follows.

### (A) Polycarbonate Resin

The linear polycarbonate of bisphenol-A having 25,000 g/mol of weight-average molecular weight, PANLITE L-1250WP available from TEIJIN Co. of Japan was used.

### (B) Syndiotactic Polystyrene Resin

The syndiotactic polystyrene, XAREC S 100 available from IDEMITSU Co. of Japan, of which melting point is 250 °C, glass transition temperature is 100 °C, and specific gravity is 1.01, was used.

### (C) Core-Shell Graft Copolymer

(c₁) PALALOID EXL-2602 available from KUREHA Co. of Japan, the core-shell graft copolymer of 70 to 80 parts by weight of a butadiene rubber of which weight-average particle diameter is about 0.1□, and 20 to 30 parts by weight of a methacryl acid methyl ester monomer; and (c₂) Metablen S 2100 available from Mitsubishi Rayon Co. of Japan, the core-shell graft copolymer of a rubber comprising 5 to 70 parts by weight of a dimethylsiloxane of which weight-average particle diameter is about 0.5 0 and 30 to 95 by weight of a butylacrylate, and 30 to 40 parts by weight of a methyl methacrylate monomer were used as an impact strengthener.

### (D) Phosphoric Acid Ester Compound

(d₁) Resorcinol-Di (bis-2,6-dimethylphenyl) phosphate, PX-200 available from Daihachi Co., in which 1 = 1, R₁, R₂, R₄, and R₅ are 2,6- dimethylphenyl, and R is derived from resorcinol in the structural formula (I) was used, and (d₃) triphenyl phosphate, TPP available from Daihachi Co. in which 1 = 0 and R₁, R₂, R₄, and R₅ are phenyl in the structural formula (I), was used.

### Examples 1-4 and Comparative Examples 1-14

Pellets were prepared from the compositions in which components were blended according to tables 1 and 2 using a twin-screw extruder with Φ=45 mm. A panel block was produced by extruding through 10 oz extruder at the resin temperature of 260 to 330°C and by molding in a mold at its temperature of 60 to 100°C from the pellet which was dried for more than three hours at 110 °C. Notched izod impact strength (1/8", 1/4") of the block was measured according to ASTM D256. Further, for the purpose of the evaluation of chemical resistance of the resin compound, the 3 mm x 100 mm x 100 mm of a panel block was submerged for one second into a paint thinner and thereafter was dried for 30 minutes at 80 °C. The load of falling ball at a fixed point was measured and compared with the load prior to the submergence into the solvent. Further, brittle fracture rate was measured after the type of damage on the resin composition was identified For the evaluation of flowability, 1 mm thickness of spiral block was extruded from the 10 oz extruder at the resin temperature of 260 to 330 °C and into a mold at its temperature of 60 to 100 °C of mold temperature which was previously produced and then dried, and then the injection flow length of the block after injection was measured.

**Table 1**

| | | Comparative Examples | | | Examples | | | |
|---|---|---|---|---|---|---|---|---|
| | | 12 | 13 | 14 | 1 | 2 | 3 | 4 |
| (A) | | 93.5 | 93 | 92 | 9² | 90 | 89 | 89 |
| (B) | | 1 | 1 | 2 | 2 | 4 | 4 | 4 |
| (C) | (c₁) | 5 | 5 | 5 | - | - | - | - |
| | (c₂) | - | - | - | 5 | 5 | 5 | 5 |
| (D) | (d₁) | 0.5 | 1 | 1 | 1 | 1 | 2 | - |
| | (d₂) | - | - | - | - | - | - | 2 |
| 1/8" IZOD impact strength(kg·□/□) | | 84 | 83 | 83 | 82 | 83 | 81 | 83 |
| 1/4" IZOD impact strength (kg·□/□) | | 65 | 57 | 57 | 59 | 58 | 57 | 59 |
| Falling ball impact strength prior emerging into a solvent (N) | | 1200 | 1170 | 1170 | 1200 | 1230 | 1200 | 1200 |
| Fatting ball impact strength after submerging into a solvent composition (N) | | 850 | 980 | 980 | 1100 | 1100 | 1050 | 1070 |
| brittle fracture rate after submerging into a solvent composition (%) | | 20 | 15 | 15 | 0 | 0 | 0 | 0 |
| Injection flow length (mm) | | 90 | 95 | 100 | 100 | 90 | 110 | 115 |

**Table 2**

| | | Comparative Examples | | | | | | | | | | |
|---|---|---|---|---|---|---|---|---|---|---|---|---|
| | | 1 | 2 | 3 | 4 | 5 | 6 | 7 | 8 | 9 | 10 | 11 |
| (A) | | 100 | 98 | 95 | 95 | 98 | 93 | 93 | 96 | 79 | 62 | 78 |
| (B) | | - | 2 | - | - | - | 2 | - | 2 | 15 | 2 | 2 |
| (C) | (c₁) | | | 5 | | | 5 | 5 | - | 5 | 35 | 5 |
| | (c₂) | - | - | - | 5 | - | - | - | - | - | - | - |
| (D) | (d₁) | - | - | - | - | 0 | - | 2 | 2 | 1 | 1 | 1.5 |
| | (d₂) | - | - | - | - | - | - | - | - | - | - | - |
| 1/8" IZOD impact strengh(kg·□/□) | | 82 | 83 | 83 | 84 | 80 | 83 | 80 | 80 | 82 | NB | 45 |
| 1/4 IZOD impact strength (kg·□/□) | 10 | 11 | 60 | 60 | 10 | 58 | 57 | 10 | 42 | NB | 25 | |
| Fatling ball impact strength prior to submerging into a solvent composition (N) | 450 | 450 | 120 0 | 123 0 | 430 | 120 0 | 110 0 | 430 | 900 | 125 0 | 500 | |
| falling ball impact strength after submerging into a solvent composition (N) | 300 | 350 | 500 | 800 | 300 | 100 0 | 400 | 320 | 700 | 105 0 | 320 | |
| Brittle fracture rate after submerging into a solvent composition (%) | 100 | 100 | 80 | 30 | 100 | 10 | 80 | 100 | 55 | 0 | 100 | |
| Injection flow length (mm) | 75 | 60 | 70 | 75 | 95 | 70 | 85 | 120 | 40 | 30 | 200 | |

| | | | | | | | | | | | | |
|---|---|---|---|---|---|---|---|---|---|---|---|---|
| *NB in the table above stands for No Break. | | | | | | | | | | | | |

According to the results in the tables 1 and 2, in Examples 1 to 4, use of a syndiotactic styrene polymer, a core-shell graft copolymer comprising silicone rubbers, a phosphoric acid ester compounds at preferred ratios improves the chemical resistance and flowability of the polycarbonate resins while maintaining the impact resistance maintained, in comparison with Comparative Examples 1 to 14 in which either only a polycarbonate was solely used, or a syndiotactic styrene group polymer, a core-shellgraft copolymer, and 9 phosphoric acid ester compound were used at undesirable ratios, or a core-shell graft copolymer comprising butadiene rubber was used. Further, in Example 1 and Comparative Example 6, flowability improves when a syndiotactic styrene polymer and a phosphorus ester compound were applied at the same time. The present invention can be easily carried out by an ordinary skilled person in the art. Many modifications and changes may be deemed to be with the scope of the present invention as defined in the following claims.

## Claims

1. A polycarbonate resin composition comprising:
(A) 80 to 98.5 parts by weight of a polycarbonate resin;
(B) 0.5 to 10 parts by weight of a syndiotactic polystyrene resin;
(C) 1 to 30 parts by weight of a core-shell graft copolymer; and
(D) 0.41 to 10 parts by weight of a phosphoric acid ester compound;
wherein the core-shell graft copolymer (C) has a polymer core which comprises silicone rubbers.

2. The polycarbonate resin composition as defined in claim 1, wherein the polycarbonate resin (A) is selected Horn the group consisting of linear polycarbonates, branched polycarbonates, and polyestercarbonate copolymers.

3. The polycarbonate resin composition as defined in claim 1, wherein the syndiotactic polystyrene resin (B) has a syndiotactic tacticity greater than 97 %.

4. The polycarbonate resin composition as defined in claim 1, wherein the core-shell graft copolymer (C) has a core-shell structure formed by the method comprising:
preparing a rubber core by polymerizing one or more silicone rubbers; and
grafting to the rubber core one or more graftable components selected from the group consisting of C₁-C₈ methacryl acid alkyl ester, C₁-C₈ methacryl acid ester, maleic anhydride, and C₁-C₄ alkyl or phenyl nucleus-substituted maleimde.

5. The polycarbonate resin composition as defined in claim 1, wherein the phosphoric acid ester compound (D) is represented by Formula (I): 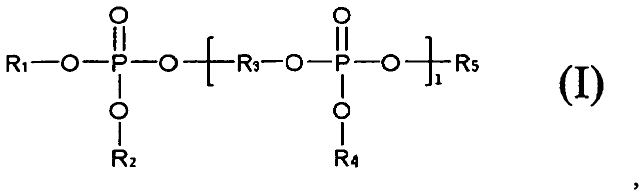 wherein R₁, R₂, R₄ and R₅ are independently C₆₋₂₀ aryl or alkyl-substituted C₆₋₂₀ aryl;
wherein R₃ is C₆₋₃₀ aryl or alkyl-substituted C₆₋₃₀ aryl derivative; and
wherein the mean value of 1 is 0 to 3.

6. The polycarbonate resin composition as defined in any one of claims 1 to 5, wherein 1/8" izod impact strength of the resin composition is more than 70 kg cm/cm, and wherein 1/4" izod impact strength of the resin composition is more than 50 kg cm/cm when tested and measured according to ASTM D256.

7. The polycarbonate resin composition as defined in any one of the Claims 1 to 5, wherein the resin composition has a falling ball impact strength greater than 1,000 N prior to submerging a specimen thereof into a solvent, greater than 800 N after the submergence, and wherein 25 % of brittle fracture rate after the submergence into a solvent.

8. The polycarbonate resin composition as defined in any one of Claims 1 to 5, wherein an extruded resin pellet of the composition is extended to longer than 90 mm when a spiral block is extruded with 1 mm thickness at 260 to 330 °C from a 10 oz extruder into a mold at 60 to 100 °C.

9. A molded article comprising a polycarbonate resin composition as defined in any one of claims 1 to 5.

10. A polycarbonate resin composition as defined in claim 1, wherein the polymer core further comprises acrylate rubbers.

11. A polycarbonate resin composition as defined in claim 1, wherein the silicone rubbers are produced from cyclositoxane.

12. A polycarbonate resin composition as defined in claim 1, wherein the silicone rubbers are produced out of one or more selected from the group consisting of hexamethylcyclotrisiloxane, octamethylcyclotetrasiloxane, decamethylcyclopentasiloxane, dodecamethyleyclohexasiloxane, trimethyltriphenylcyclotrisiloxane, tetramethyltetraphenylcyclotetrosiloxane and octaphenylcyclotetrasiloxane.

## Patentansprüche

1. Polycarbonatharzzusammensetzung, umfassend:
(A) 80 bis 98,5 Gewichtsteile eines Polycarbonatharzes;
(B) 0,5 bis 10 Gewichtsteile eines syndiotaktischen Polystyrolharzes;
(C) 1 bis 30 Gewichtsteile eines Kem-Schale-Pfropfcopolymers; und
(D) 0,01 bis 10 Gewichtsteile einer Phosphorsäureesterverbindung;
wobei das Kern-Schale-Pfropfcopolymer (C) einen Polymerkern aufweist, der Siliconkautschuks umfasst.

2. Polycarbonatharzzusammensetzung nach Anspruch 1, wobei das Polycarbonatharz (A) ausgewählt ist aus der Gruppe, bestehend aus linearen Polycarbonaten, verzweigten Polycarbonaten und Polyestercarbonatcopolymeren.

3. Polycarbonatharzzusammensetzung nach Anspruch 1, wobei das syndiotaktische Polystyrolharz (B) eine syndiotaktische Taktizität von größer als 97% aufweist.

4. Polycarbonatharzzusammensetzung nach Anspruch 1, wobei das Kem-Schale-Pfropfcopolymer (C) eine Kern-Schale-Struktur aufweist, die durch das Verfahren gebildet wird, das umfasst:
Herstellen eines Kautschukkerns durch Polymerisieren von einem oder mehreren Siliconkautschuk(s); und
Pfropfen von einem oder mehreren pfropfbaren Bestandteil(en), ausgewählt aus der Gruppe, bestehend aus C₁-C₈-Methacrylsäurealkylester, C₁-C₈-Metliaerylsäureester, Maleinsäureanhydrid und C₁-C₄-Alkyl- oder Phenylkernsubstituiertes Maleiimid auf den Kautschukkem.

5. Polycarbonatharzzusammensetzung nach Anspruch 1, wobei die Phosphorsäureesterverbindung (D) durch die Formel (I) 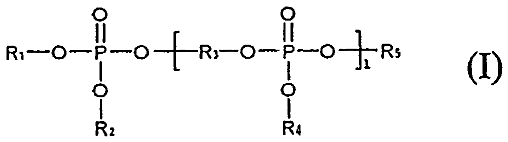 dargestellt ist, wobei R₁, R₂, R₄ und R₅ unabhängig C₆₋₂₀-Aryl oder alkylsubstituiertes C₆₋₂₀-Aryl sind;
wobei R₃ C₆₋₃₀-Aryl oder alkylsubstituiertes C₆₋₃₀-Arylderivat ist und
wobei der Mittelwert von 10 bis 3 beträgt.

6. Polycarbonatharzzusammensetzung nach einem der Ansprüche 1 bis 5, wobei die 1/8"-Izod-Schlagzähigkeit der Harzzusammensetzung melu als 70 kg cm/cm beträgt und wobei die ¼ "-Izod-Schlagzähigkeit der Harzzusammensetzung mehr als 50 kg cm/cm beträgt, wem sie gemäß ASTM D256 geprüft und gemessen wird.

7. Polycarbonatharzzusammensetzung nach einem der Ansprüche 1 bis 5, wobei die Harzzusammensetzung eine Kugelfall-Schlagzähigkeit vor dem Eintauchen eines Probenstücks davon in ein Lösungsmittel von größer als 1.000 N, nach dem Eintauchen von größer als 800 N aufweist, und wobei nach dem Eintauchen in ein Lösungsmittel 25% der Sprödbruchrate vorliegen.

8. Polycarbonatharzzusammensetzung nach einem der Ansprüche 1 bis 5, wobei ein extrudiertes Harzpellet der Zusammensetzung auf mehr als 90 mm verlängert wird, wenn ein Spiralblock mit einer Dicke von 1 mm bei 260 bis 330°C aus einem Extruder mit 10 Unzen in eine Form mit 60 bis 100°C extrudiert wird.

9. Fonngegenstand, umfassend eine Polycarbonatharzzusammensetzung nach einem der Ansprüche 1 bis 5.

10. Polycarbonatharzzusammensetzung nach Anspruch 1, wobei der Polymerkern des Weiteren Acrylatkautschuks umfasst.

11. Polycarbonatharzzusammensetzung nach Anspruch 1, wobei die Siliconkautschuks aus Cyclosiloxan hergestellt sind.

12. Polycarbonatharzzusammensetzung nach Anspruch 1, wobei die Siliconkautschuks aus Einem oder Mehreren hergestellt sind, ausgewählt aus der gruppe, bestehend aus Hexamethylcyc1o-trisiloxan, Octamethylcyclotetrasiloxan, Decainethylcyclopentasiloxan, Dodecamethylcyclohexasiloxan, Trimethylphenylcyclotrisiloxan, Tetramethyltetraphenylcyclotetrasiloxan und Octaphenylcyclotetrasiloxan.

## Revendications

1. Composition de résine de polycarbonate, comprenant :
(A) 80 à 98,5 parties en poids d'une résine de polycarbonate ;
(B) 0,5 à 10 parties en poids d'une résine de polystyrène syndiotactique ;
(C) 1 à 30 parties en poids d'un copolymère greffé coeur-coque ; et
(D) 0,01 à 10 parties en poids d'un composé ester de l'acide phosphorique;
dans laquelle le copolymère greffé coeur-coque (C) a un coeur polymère qui comprend des caoutchoucs silicones.

2. Composition de résine de polycarbonate telle que définie dans la revendication 1, dans laquelle la résine de polycarbonate (A) est choisie dans le groupe consistant en les polycarbonates linéaires, les polycarbonates ramifiés et les copolymères polyestercarbonates.

3. Composition de résine de polycarbonate telle que définie dans la revendication 1, dans laquelle la résine de polystyrène syndiotactique (B) a une tacticité syndiotactique supérieure à 97 %.

4. Composition de résine de polycarbonate telle que définie dans la revendication 1, dans laquelle le copolymère greffé coeur-coque (C) a une structure coeur-coque formée par le procédé comprenant :
la préparation d'un coeur de caoutchouc par polymérisation d'un ou plusieurs caoutchoucs silicones ; et
le greffage, au coeur de caoutchouc, d'un ou plusieurs composants greffables choisis dans le groupe consistant en les esters alkyliques en C₁-C₈ de l'acide méthacrylique, les esters en C₁-C₈ de l'acide méthacrylique, l'anhydride maléique et les maléimides à substitution alkyle en C₁-C₄ ou phényle sur le noyau.

5. Composition de résine de polycarbonate telle que définie dans la revendication 1, dans laquelle le composé ester de l'acide phosphorique (D) est représenté par la formule (I) : 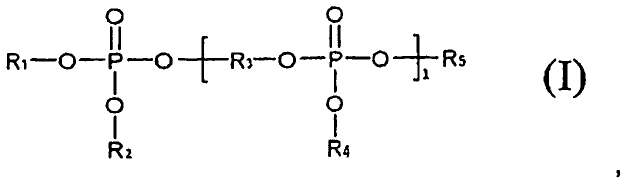 dans laquelle R₁, R₂, R₄ et R₅ représentent chacun indépendamment des autres un groupe aryle en C₆-C₂₀ ou aryle en C₆-C₂₀ à substitution alkyle ;
R₃ étant un dérivé d'un groupe aryle en C₆-C₃₀ ou d'un groupe aryle en C₆-C₃₀ à substitution alkyle ; et
la valeur moyenne de 1 étant de 0 à 3.

6. Composition de résine de polycarbonate telle que définie dans l'une quelconque des revendications 1 à 5, dans laquelle la résistance au choc Izod sur barreau entaillé à 1/8" de la composition de résine est supérieure à 70 kg cm/cm, et la résistance au choc Izod sur barreau entaillé à 1/4" de la composition de résine est supérieure à 50 kg cm/cm, l'essai et la mesure étant effectués selon ASTM D256.

7. Composition de résine de polycarbonate telle que définie dans l'une quelconque des revendications 1 à 5, dans laquelle la composition de résine a une résistance au choc à la bille tombante supérieure à 1 000 N avant immersion d'une éprouvette en cette composition dans un solvant, supérieure à 800 N après l'immersion, avec un taux de fracture fragile de 25 % après immersion dans un solvant.

8. Composition de résine de polycarbonate telle que définie dans l'une quelconque des revendications 1 à 5, dans laquelle le granulé de résine extrudée obtenu à partir de la composition s'allonge à plus de 90 mm quand un bloc spirale est extrudé avec une épaisseur de 1 mm à 260 à 330°C à partir d'une extrudeuse de 10 oz dans un moule à 60 à 1000°C.

9. Article moulé comprenant une composition de résine de polycarbonate telle que définie dans l'une quelconque des revendications 1 à 5.

10. Composition de résine de polycarbonate telle que définie dans la revendication 1, dans laquelle le coeur polymère comprend en outre des caoutchoucs acrylates.

11. Composition de résine de polycarbonate telle que définie dans la revendication 1, dans laquelle les caoutchoucs silicones sont produits à partir de cyclosiloxane.

12. Composition de résine de polycarbonate telle que définie dans la revendication 1, dans laquelle les caoutchoucs silicones sont produits à partir d'un ou plusieurs des composés choisis dans le groupe consistant en l'hexaméthylcyclotrisiloxane, l'octaméthylcyclotétrasiloxane, le décaméthylcyclopentasiloxane, le dodécaméthyl-cyclohexasiloxane, le triméthyltriphénylcyclotrisiloxane, le tétraméthyltétraphénylcyclotétrasiloxane et l'octaphényl-cyclotétrasiloxane.
